# FASCICULE DE BREVET EUROPEEN

(11) **EP 2 916 993 B1**
(45) Date de publication et mention de la délivrance du brevet: **20.03.2019**
(21) Numéro de dépôt: 13803126.5
(22) Date de dépôt: 08.11.2013
(51) Int. Cl.: B23P 15/02, F01D 5/14

(54) **PROCÉDÉ ET DISPOSITIF DE FABRICATION D'AUBES DE TURBINES.**
VERFAHREN UND VORRICHTUNG ZUR HERSTELLUNG VON TURBINENSCHAUFELN
METHOD AND DEVICE FOR MANUFACTURING TURBINE BLADES

(30) Priorité: 09.11.2012 FR 1260682; 15.01.2013 FR 1300071
(43) Date de publication de la demande: 16.09.2015
(73) Titulaire: Mecachrome France, 37403 Amboise Cedex (FR)
(72) Inventeur: DE PONNAT, Arnaud, F-Parcay-Meslay 37210 (FR); MARTIN, Olivier, F-45230 Sainte Genevieve des Bois (FR)
(74) Mandataire: Benech, Frédéric
(86) Numéro de dépôt international: PCT/FR2013/052695
(87) Numéro de publication internationale: WO 2014/072661

(56) Documents cités:
- EP-A1- 1 623 792
- EP-A1- 2 423 340
- DE-A1-102007 051 499
- DE-A1-102010 042 585
- DE-C- 450 960
- JP-A- S5 391 412
- JP-A- S59 102 533
- JP-A- 2000 068 026
- US-A- 1 377 300
- US-A- 5 711 068
- DATABASE WPI Week 201017 Thomson Scientific, London, GB; AN 2010-C20590 XP002697249, -& RU 2 381 083 C1 (VSMPO-AVISMA CORP STOCK CO) 10 février 2010 (2010-02-10)

## Description

La présente invention concerne un procédé de fabrication d'aubes de turbines en alliage métallique.

Elle trouve une application particulièrement importante bien que non exclusive dans le domaine des aubes ou pales utilisées dans le secteur de l'aéronautique ou le domaine de l'énergie.

Traditionnellement, les aubes en aéronautique sont issues soit de brut de fonderie soit de brut de forge, partiellement ou totalement ré-usinées.

Lorsque l'usinage n'est que partiel et en particulier lorsque le profil de l'aube est fini sans ré-usinage mécanique, une opération de redressage, conformation et/ou calibrage est alors indispensable pour assurer le dimensionnement fonctionnel.

Pour des aubes de turbine de petite dimension, dans le cas de constitution de prototype de développement, ou pour mise au point, ou encore pour des aubes de série en matériaux facilement usinables et peu chers, on utilise des gammes dites en taillée masse.

De telles solutions présentent des inconvénients dans le cas où on souhaiterait utiliser de l'Aluminiure de Titane (gamma TiAl), qui présente une bonne résistance en température, mais une fragilité importante à la température ambiante.

Plus précisément, ces solutions connues posent les problèmes suivants.

Lorsqu'on se situe dans le cadre d'une gamme obtenue à partir d'un barreau brut forgé, le forgeage doit être réalisé dans des conditions quasi isothermes et avec des vitesses de déformation relativement basses et à haute température. Dans ce cas, les outillages sont chers et avec une durée de vie limitée.

Des cadences importantes sont par ailleurs difficiles à atteindre (multiplication de moyens spécifiques et chers) et le calibrage doit de plus être réalisé à haute température. Il est dès lors difficile de réaliser une aube avec un profil fini dans ce type de matériau, même avec une reprise en usinage chimique d'une éventuelle surépaisseur.

En conclusion, partir d'un brut sur-épaissi de forge ou extrudé et reprendre en totalité la surface en usinage mécanique est possible mais nécessite une gamme en usinage complexe pour être capable de suivre les déformations liées aux relaxations de contrainte, voire d'utiliser une gamme auto adaptative. En outre, utiliser un brut de forge oblige à avoir au minimum trois familles d'opération : élaboration matière, forgeage, et usinage, avec un cycle de fabrication relativement long.

On connaît des procédés de fabrication d'aubes pour turbomachine (EP 1 623 792) réalisés par prélèvement d'une ébauche dans une couronne à paroi tubulaire.

Les aubes ainsi forgées présentent des désavantages. Leur géométrie est très contrainte en étant contenue dans un segment de tubulure. Notamment du fait de la cambrure de la tubulure elle nécessite une opération de vrillage/cambrage et le procédé ne permet pas l'obtention d'un produit fini par usinage. Elles sont de plus limitées dans leur dimension notamment en épaisseur.

Dans le cas d'une gamme obtenue avec un brut de fonderie, la fonderie doit être réalisée sous vide ou sous atmosphère protectrice et avec des procédés permettant d'alimenter en métal très rapidement des sections relativement fines (procédés de centrifugation par exemple).

L'obtention d'un profil acceptable sans reprise en usinage mécanique nécessite alors un redressage, qui s'apparente au calibrage précédent dans le cas où on utiliserait de l'Aluminiure de Titane (gamma TiAl) et ce, pour limiter le taux de pièces non conformes, avec les mêmes inconvénients qu'indiqués ci-dessus.

En fait, partir d'un brut sur-épaissi de fonderie et reprendre en totalité la surface en usinage mécanique est certes possible mais nécessite ici encore une gamme en usinage complexe pour être capable de suivre les déformations liées aux relaxations de contrainte, ledit procédé générant quoiqu'il en soit un taux de rebut important lié aux défauts de fonderie débouchant après usinage.

Une opération de compression isostatique à chaud est de ce fait également souvent nécessaire pour refermer des défauts de fonderie et limiter ainsi leur présence dans le brut.

Utiliser un brut de fonderie oblige enfin à avoir trois à cinq familles d'opération: élaboration matière, fonderie, éventuellement compression isostatique à chaud, éventuellement redressage, et enfin usinage, et ce ici encore avec un cycle de fabrication relativement long.

On connaît également des procédés de fabrication d'éléments de turbine à partir d'un brut de fonderie et par traitement thermique et usinage (EP 2 423 340) .

Ces procédés ajoutent encore une étape de traitement thermique complexe et onéreuse. De plus ils procèdent par découpe de tranches rectangulaires de matières juxtaposées ce qui ne permet pas d'économiser de la matière.

Dans le cas d'une gamme dite taillée masse en usinage mécanique, il s'agit ici de partir d'un lopin (réalisé en fonderie ou en extrusion) et de transformer cette géométrie simple en celle de la pièce en enlevant le surplus de matière par usinage.

Compte tenu de la difficulté à usiner le gamma TiAl (encore une fois conditions de coupe assez basses, usure des outils importante, fragilité de la matière à température ambiante...) et du coût important de la matière, cette voie présente ici encore des inconvénients sérieux pour la réalisation d'aubes en série.

La présente invention vise à pallier ces inconvénients et à proposer un procédé et un dispositif répondant mieux que ceux antérieurement connus aux exigences de la pratique, notamment en limitant la quantité de matière mise en oeuvre, et donc de matière à usiner par rapport à la gamme dite taillée masse, à s'affranchir d'opération de balançage, à réduire les cycles de fabrication, et le coût énergétique, et ce tout en utilisant des moyens industriels standards.

Par balançage on entend le repositionnement ou l'orientation dans l'espace d'une pièce pour mesurer ses défauts de planéité et/ou déformation par rapport à une référence de façon à minimiser/moyenner les défauts géométriques de la pièce.

Avec l'invention il va être possible de concevoir des produits bruts permettant l'exclusion ou la minimisation des défauts liés à la fonderie.

Il s'ensuit un nombre moindre de rebuts.

Pour ce faire l'invention part de l'idée de choisir des géométries simples et/ou axisymétriques pour en forme de barreau plein initial, qui permettent d'utiliser le stade d'élaboration de la matière (mélange des différents éléments pour en faire un alliage) pour former ledit barreau. Ceci permet de s'affranchir dès le départ de l'opération de fonderie proche des cotes recherchées.

Par barreau de géométrie simple on entend un barreau plein de section génératrice polygonale, circulaire ou ovale ou sensiblement polygonale, sensiblement circulaire ou sensiblement ovale.

Le barreau peut donc par exemple présenter une forme parallélépipédique de section rectangulaire, carrée ou trapézoïdale.

La section peut être constante ou non en fonction par exemple de la forme des pièces recherchées in fine, par exemple avec des extrémités plus volumineuses que la partie centrale.

Par barreau axisymétrique on entend un barreau plein allongé autour d'un axe et présentant par exemple une forme géométrique cylindrique, conique ou tronconique.

Ici encore la section peut être constante ou varier en fonction de la position de la section sur l'axe.

Avantageusement, le barreau présente une et/ou des faces planes et/ou convexes.

Selon un mode de réalisation avantageux de l'invention le barreau présente des faces planes ou toujours convexes.

Cette même géométrie simple permet de limiter la présence de défauts de matière et de les positionner dans des zones précises et reproductibles qui seront chutées (éliminées).

La géométrie simple et/ou axisymétrique permet de plus de ne pas avoir de niveau de contrainte résiduelle trop important car le refroidissement est plus homogène par rapport à une pièce présentant des zones massives et fines.

Il y a donc moins de risque de rebut pour cause de déformation lors de l'usinage.

Dans ce but, l'invention propose notamment un procédé de fabrication d'aubes de turbines en alliage métallique comprenant les caractéristiques de la revendication 1.

En d'autres termes, on réalise l'imbrication optimisée de plusieurs aubes, par exemple en gamma TiAl, dans un même lopin (ou barreau), ce qui nécessite d'aller à l'encontre des idées reçues favorisant les gammes avec fonderie (profil fini ou semi-fini).

Pour cela, il fallait accepter d'optimiser à chaque fois l'imbrication, ce qui nécessite une réflexion en amont sur le positionnement des pièces les unes par rapport aux autres, en en définissant de plus le nombre optimal, tout en intégrant les contraintes du ou des procédés de découpe à utiliser.

Dans certains cas, cela va entraîner une modification en retour de la conception de la pièce pour en optimiser l'imbrication, en déplaçant par exemple des parties d'aube sur le disque ou en rajoutant une pièce, ce qui va à l'encontre du fonctionnement de pensée de l'homme du métier.

La découpe imbriquée permet de faire plusieurs pièces dans le même barreau et donc de limiter la quantité de matière.

Elle permet aussi de récupérer de la matière de bonne qualité et en plus grande quantité pour la recycler. On notera ici que seules les masselottes sont récupérables par la voie fonderie, les attaques de coulée étant chutées.

La présente invention permet d'éviter ces inconvénients.

Avec la présente invention il est ainsi possible de partir d'un barreau par exemple de 2,3 kg de matière, pour deux ébauches de 0,4 kg après découpe au jet d'eau, pour obtenir deux pièces (aubes) de par exemple 90 grammes.

Le taux de rebut observé est alors inférieur à 5 %, alors que le taux de rebut habituel en série de l'art antérieur pour ces pièces et dans un alliage plus facile à travailler que celui de l'invention est de l'ordre de 35 %.

La décomposition du coût de la pièce (à périmètre de rebut égal, et prix de matière au kilo égal etc...) montre un gain de 10 % par rapport à ce qui est observé habituellement.

Dans des modes de réalisation avantageux de l'invention, on a de plus recours à l'une et/ou à l'autre des dispositions suivantes :
- les ébauches imbriquées sont identiques, réalisées en vis à vis, de façon symétriques deux à deux, respectivement par rapport à un point, une droite ou un plan central ;
- l'alliage d'Aluminiure de Titane est du gamma TiAl ;
- on réalise les ébauches à partir d'un barreau cylindrique ;
- on réalise les ébauches à partir d'un barreau présentant une ou des faces externes comportant uniquement des surfaces droites ou convexes.

La description se réfère aux dessins qui l'accompagnent dans lesquels :
La figure 1 illustre en vue latérale un lopin ou barre parallélépipédique dans lequel sont réalisées trois ébauches imbriquées pour production d'aubes de turbine selon un premier mode de réalisation de l'invention.
La figure 2 montre en vue latérale et en vue transversale un autre mode de réalisation d'une barre cylindrique dans laquelle sont réalisées deux ébauches/aubes imbriquées selon l'invention.
La figure 3 est une vue en coupe transversale de deux ébauches d'aube imbriquées selon un autre mode de réalisation de l'invention.
La figure 4 montre en vue schématique un dispositif de fabrication d'une aube de turbine.
La figure 5 est une vue en perspective d'une aube obtenue avec le procédé selon l'invention plus particulièrement décrit ici.
La figure 6 montre en perspective deux ébauches imbriquées de pales réalisées conformément au procédé selon l'invention.
La figure 7 illustre schématiquement les étapes d'un procédé selon un mode de réalisation de l'invention.

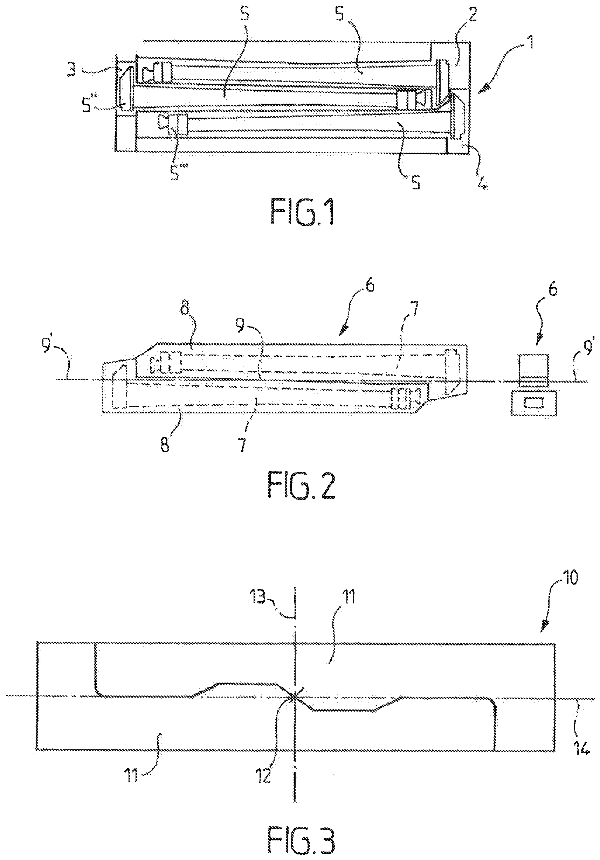

La figure 1 montre schématiquement une vue latérale d'un lopin 1 ou barre parallélépipédique pleine, en Aluminiure de Titane dans lequel sont réalisées trois ébauches 2, 3, 4 imbriquées (l'une dans l'autre) identiques ou sensiblement identiques (en tenant compte d'une optimisation des imbrications) pour production d'aubes 5 de turbines selon un mode de réalisation de l'invention

Le lopin 1 est par exemple de 6 kg pour réaliser trois ébauches de sensiblement 2 kg, dont seront extraites trois aubes de 1 kg. Les aubes présentent chacune une âme 5' et deux extrémités 5" et 5''' configurées de façon connue en elle-même par usinage.

La figure 2 est un mode de réalisation d'une autre barre 6 de géométrie simple, allongée autour d'un axe, ici cylindrique et propre à permettre la fabrication de deux aubes 7 à partir d'ébauches symétriques 8 par rapport à un point de symétrie 9 appartenant au plan central 9'.

Les ébauches 2, 3 ou 4 ou 8 imbriquées l'une dans l'autre sont obtenues par découpe du même barreau au jet d'eau comme cela va être décrit ci-après.

On a montré sur la figure 3 une vue en coupe transversale d'un barreau 10 parallélépipédique dans lequel sont découpées par l'intermédiaire d'un canon de découpe, deux ébauches 11 imbriquées identiques, ici de façon symétrique par rapport à un axe 12 obtenu par l'intersection de deux plans 13 et 14 de symétrie du barreau parallélépipédique 10.

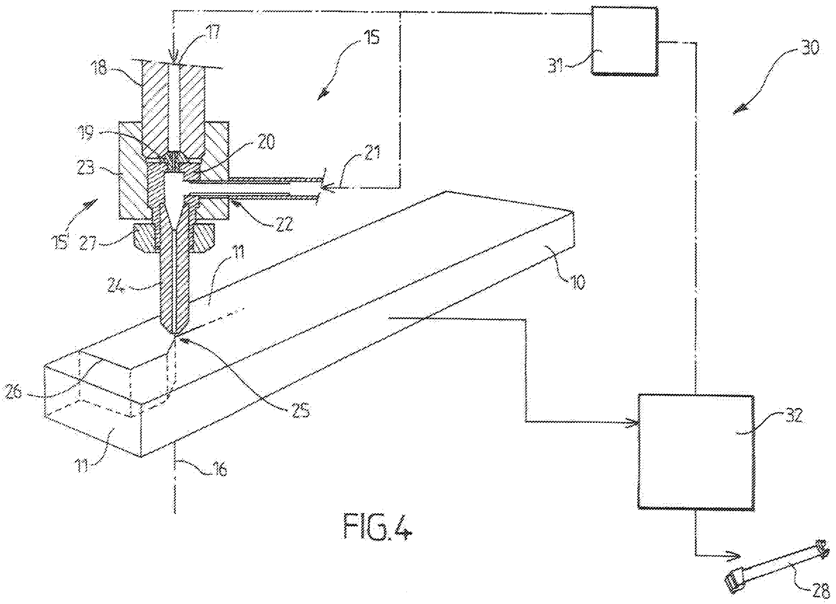

La figure 4 montre plus précisément un mode de réalisation d'un dispositif 15 mettant en oeuvre le procédé de découpe de l'ébauche 10.

Celui-ci utilise un canon de découpe 15' au jet d'eau 16 du type connu en lui-même.

L'eau à très forte pression (par exemple 3800 bars) est introduite en 17 dans un tube de collimation 18, puis focalisée par le biais d'une buse 19 dans une chambre de mélange 20 avec un abrasif 21 introduit en 22 dans la chambre située dans le corps de la tête 23 du canon 15'.

Le canon de focalisation 15' comprend un injecteur 24 qui vient attaquer en 25 la barre 10 pour réaliser la découpe 26 selon la trajectoire de découpe recherchée par le concepteur des aubes et qui a été optimisée notamment au niveau de la consommation de matière.

Un écrou de serrage 27 permet la fixation de l'injecteur du canon de focalisation sur le corps de tête 23.

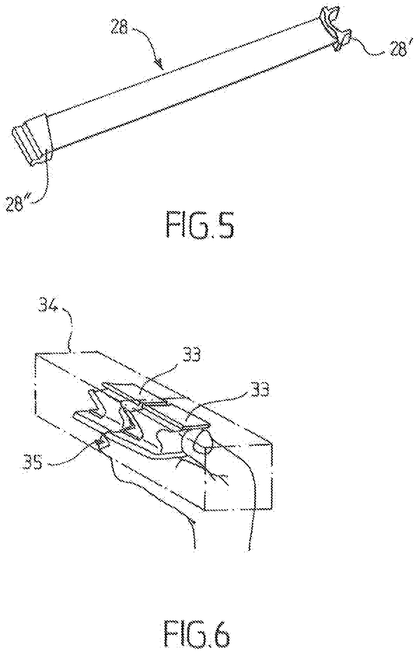

A partir des deux ébauches 11 obtenues dans le barreau 10, et selon le mode de réalisation du procédé plus particulièrement décrit ici on usine ensuite séparément chacune desdites ébauches 11 ainsi obtenues pour aboutir aux aubes 28 telles que représentées sur la figure 5.

Un tel procédé de découpe n'était pas utilisé dans l'art antérieur car l'homme du métier n'envisageait pas l'intérêt d'une imbrication d'ébauches les unes avec les autres mais cherchait plutôt à d'emblée, compte tenu de la complexité des pièces à obtenir, à fabriquer celles-ci une par une à partir d'un même barreau de forme plus complexe.

L'intelligence résidait donc dans la conception du moule de fonderie.

Le dispositif 15 comprend par ailleurs un automate 30 de commande du canon 15', comportant un ordinateur 31, programmé pour réaliser simultanément les deux ébauches 11 imbriquées l'une dans l'autre de façon connue en elle-même. Une fois les ébauches 11 ainsi obtenues des moyens d'usinage 32 par enlèvement de copeaux ou autres moyens connus comme l'usinage électrochimique, comprenant par exemple des centres de fraisage quatre axes, des machines d'usinage électrochimique PECM (initiales anglo-saxonne de Précision ElectroChemical Machining), des centres de rectification... sont prévus afin d'obtenir les aubes 28 telles que décrites ci-avant.

On a représenté sur la figure 6 un autre mode de réalisation d'aubes 33 identiques obtenues dans un barreau parallélépipédique 34 en trait mixte sur la figure, découpées selon la courbe 35 pour obtention d'ébauche et programmé en conséquence.

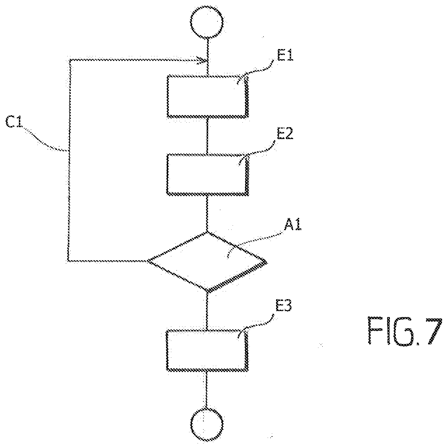

On va maintenant décrire un mode de réalisation de la fabrication d'une aube en référence à la figure 7.

Après avoir choisi un barreau plein, le procédé comprend une première étape E1 dans laquelle les paramètres géométriques du barreau sont introduits dans l'ordinateur 31.

L'ordinateur 31 crée un modèle de barreau sur la base de ces informations.

Dans une seconde étape E2, des paramètres de géométrie d'aubes sont introduits dans l'ordinateur 31 qui crée également des modèles d'aubes pour une utilisation déterminée par exemple pour une pale placée dans la veine de circulation d'un flux d'air de turbomachine dans des conditions aérodynamiques déterminées.

L'ordinateur 31 comprenant des moyens de calcul programmés compare les modèles de barreau et d'aubes pour en déterminer l'agencement optimal, i.e. le plus économe en matière tout en respectant les contraintes physiques.

Par exemple, un modèle est formé par une liste de quadruplets. Chacun des trois premiers éléments représente une des trois coordonnées d'un espace cartésien le dernier correspond à l'appartenance ou non à la pièce/barreau modélisé.

Le programme comprend un algorithme A1 qui :
- détermine un repère dans l'espace,
- positionne le modèle du barreau dans ce repère,
- positionne quelques points (par exemple trois) du modèle d'aube déterminé et,
- détermine si, en fonction des points du modèle d'aube positionnés dans ledit repère, l'ensemble du modèle est contenu ou non dans le barreau et si aucun point ne se superpose avec une autre aube préalablement placée. Cette étape est réalisée par exemple par comparaison quadruplet par quadruplet de chaque modèle.
   * si on compare une aube et le barreau et qu'il existe au moins un quadruplet de l'aube n'ayant pas d'égal dans le modèle du barreau (Cas 1) alors au moins un point de l'aube est en dehors du barreau,
   * si on compare deux aubes et qu'il existe au moins un quadruplet de chaque modèle qui soit égal entre eux (Cas 2) alors au moins un point de chaque aube s'interpénètre.
- Réitère l'étape précédente tant que le cas 1 ou 2 se présente.

Si l'algorithme ne trouve pas de solution de combinaison des aubes dans un barreau alors le procédé revient par C1 à une étape précédente E1 (ou dans un autre mode de réalisation E2).

Ce bouclage permet d'assurer une optimisation de l'imbrication qui ne soit pas une simple juxtaposition et donc permet des économies de matière et dans certains cas met en évidence l'utilité d'une réingénierie des aubes.

L'ordinateur 31 peut comporter des moyens d'affichages (non représentés) permettant la visualisation des différentes aubes dans un même barreau et leur éventuel replacement par un opérateur 31.

D'autres paramètres peuvent également intervenir dans l'algorithme pour optimiser le positionnement des aubes, tels que par exemple les caractéristiques du jet d'eau de découpe (largeur, profondeur, ...), et de données relatives à la qualité du matériau en un point considéré.

Enfin, dans une troisième étape E3, l'ordinateur détermine le profil de découpage, par exemple une courbe médiane entre les modèle d'aubes dans le barreau et pilote le jet d'eau en conséquence pour la découpe.

Comme il va de soi et comme il résulte d'ailleurs de ce qui précède l'invention n'est pas limitée aux modes de réalisations plus particulièrement décrits mais en embrasse au contraire toutes les variantes dans le cadre des revendications et notamment celles où plus de trois ébauches sont obtenues par découpes simultanées, où le profil d'un barreau n'est pas droit mais courbe ou ceux dans lesquels les périmètres des sections génératrices comprennent un nombre faible et limité de points (inférieur à 25) reliés entre eux par des droites ou courbes.

## Revendications

1. Procédé de fabrication d'aubes (5; 7; 28; 33) de turbines en alliage métallique à partir d'un barreau plein, **caractérisé en ce que** ledit barreau plein est un barreau (10, 34) fait en fonderie ou extrudé, en Aluminiure de Titane, et **en ce qu'**on réalise simultanément au moins deux ébauches d'aube (2 ; 3 ; 4 ; 8 ; 11) imbriquées l'une dans l'autre, dans ledit barreau plein (10; 34) par découpe au jet d'eau (16), puis on usine séparément chacune desdites ébauches (2 ; 3 ; 4 ; 8 ; 11) ainsi obtenues pour aboutir auxdites aubes (5; 7; 28; 33) avec un profil définitif.

2. Procédé selon la revendication 1, caractérisé les ébauches (2 ; 3 ; 4 ; 8 ; 11) imbriquées sont identiques, réalisées en vis à vis, de façon symétriques deux à deux, respectivement par rapport à un point (9), une droite ou un plan central (9').

3. Procédé selon l'une quelconque des revendications précédentes, **caractérisé en ce que** l'alliage en Aluminiure de Titane est du gamma TiAl.

4. Procédé selon l'une quelconque des revendications précédentes, **caractérisé en ce qu'**on réalise les ébauches (2 ; 3 ; 4 ; 8 ; 11) à partir d'un barreau (10; 34) cylindrique et/ou présentant une ou des faces externes comportant uniquement des surfaces droites ou convexes.

## Patentansprüche

1. Verfahren zur Herstellung von Turbinenschaufeln (5; 7; 28; 33) aus einer metallischen Legierung ausgehend von einem vollen Stab,
**dadurch gekennzeichnet,**
**dass** der volle Stab ein gegossener oder extrudierter Stab (10, 34) aus Titanaluminid ist und
**dass** mindestens zwei ineinandergreifende Schaufelrohlinge (2; 3; 4; 8; 11) in dem vollen Stab (10; 34) durch Wasserstrahlschneiden (16) gleichzeitig hergestellt werden und dann der jeweilige so erhaltene Rohling (2; 3; 4; 8; 11) getrennt bearbeitet wird, um die Schaufeln (5; 7; 28; 33) mit einem endgültigen Profil zu erhalten.

2. Verfahren nach Anspruch 1,
**dadurch gekennzeichnet,**
**dass** die ineinandergreifenden Rohlinge identisch sind, wobei sie einander gegenüberliegend paarweise symmetrisch in Bezug auf einen Punkt (9), eine Gerade bzw. eine mittige Ebene (9') hergestellt sind.

3. Verfahren nach einem beliebigen der vorhergehenden Ansprüche,
**dadurch gekennzeichnet,**
**dass** es sich bei der Titanaluminid-Legierung um Gamma-TiAl handelt.

4. Verfahren nach einem beliebigen der vorhergehenden Ansprüche,
**dadurch gekennzeichnet,**
**dass** die Rohlinge (2; 3; 4; 8; 11) ausgehend von einem zylindrischen Stab (10; 34) hergestellt werden, und/oder von einer Außenfläche oder Außenflächen mit lediglich geraden oder konvexen Oberflächen dargestellt werden.

## Claims

1. Method for the manufacture of turbine blades (5; 7; 28; 33) of metal alloy from a solid bar, **characterised in that** said solid bar is a bar (10, 34) made in a foundry or extruded, of titanium aluminide, and **in that** at least two blade blanks (2; 3; 4; 8; 11) nested one inside the other are made simultaneously, in said solid bar (10; 34) by water-jet cutting (16), then each of said blanks (2; 3; 4; 8; 11) thus obtained is machined separately in order to arrive at said blades (5; 7; 28; 33) with a final profile.

2. Method according to claim 1, **characterised in that** the nested blanks (2; 3; 4; 8; 11) are identical, produced facing each other, symmetrical in twos, respectively in relation to a point (9), a straight line or a central plane (9').

3. Method according to any one of the preceding claims, **characterised in that** the titanium aluminide alloy is gamma TiAl.

4. Method according to any one of the preceding claims, **characterised in that** the blanks (2; 3; 4; 8; 11) are made from a cylindrical bar (10; 34) and/or a bar having one or more external faces comprising only straight or convex surfaces.
